**Europäisches Patentamt**

**European Patent Office**

**Office européen des brevets**

(19)

(11) Publication number : **0 668 339 A1**

(12) # EUROPEAN PATENT APPLICATION

(21) Application number : **95300980.0**

(22) Date of filing : **16.02.95**

(51) Int. Cl.⁶ : **C09K 7/00,** C09K 7/02

(30) Priority : **18.02.94 US 198602**

(43) Date of publication of application :
**23.08.95 Bulletin 95/34**

(84) Designated Contracting States :
**FR GB IT NL**

(71) Applicant : **BAKER-HUGHES INCORPORATED**
**3900 Essex Lane**
**Suite 1200**
**P.O. Box 4740**
**Houston Texas 77210-4740 (US)**

(72) Inventor : **Alonso-deBolt, Maria**
**3526 Spruce Park Circle**
**Kingwood, Texas 77345 (US)**
Inventor : **Jarrett, Michael A.**
**8427 Bluegate Court**
**Houston, Texas 77025 (US)**

(74) Representative : **Cline, Roger Ledlie**
**EDWARD EVANS & CO.**
**Chancery House**
**53-64 Chancery Lane**
**London WC2A 1SD (GB)**

(54) **Drilling fluid additive for watersensitive shales and clays, and method of drilling using the same.**

(57)   Disclosed is a drilling fluid additive for use with water sensitive shales, clays or fines, comprising a polymer, such as for example, polyvinylpyrrolidone, polyvinylalcohol, starches, cellulosic material, or partially hydrolyzed polyacrylamide, and comprising at least one of an alcohol such as a polypropylene glycol or an amphoteric surfactant such as a betaine. Also disclosed is an aqueous drilling fluid comprising such an additive, and a method of drilling water sensitive shales, clays or fines.

EP 0 668 339 A1

The present invention relates to well fluids, to well fluid additives and to methods of treating wells. In another aspect, the present invention relates to drilling fluid additives comprising a polymer and a water soluble or near water soluble alcohol and/or an amphoteric surfactant, drilling fluids comprising such additives, and to drilling methods utilizing such fluids or additives.

Water base drilling fluids or muds generally comprise water, clays or polymers and various treating agents which control the physical, and/or rheological properties of the drilling fluid in wellbores. The drilling fluid serves to remove chips, cuttings and the like produced by a rotating drill bit from a wellbore by circulating the drilling fluid down from the surface of the well, through the drill string, and out through openings in the drill bit such that the drilling fluid is then circulated upwardly in the annulus between the side of the wellbore and the rotating drill string.

Selection of a drilling fluid is primarily dependent upon the geological formation being drilled and the problems associated with such formation. One of the concerns in the selection of a drilling fluid is the presence of water sensitive shales, clays or fines.

It is well known that oil and gas well drilling, production and treating operations are many times hindered by the presence of water-sensitive shales, clays and other fines capable of swelling and/or migrating in the formation upon their interaction with water-bases well fluids. The shales, clays and fines may be already present or may introduced into the formation during formation drilling, production or treating activity. In some instances, the shales, clays and fines are quiescent causing no obstruction to the flow of hydrocarbons through the subterranean formation, or interference with drilling activities. However, when water-sensitive shales, clays or fines are disturbed with a water-based well fluid, they can swell and disperse and interfere with drilling, production or treating operations.

Unfortunately, most drilling, treatment and production activity associated with the oil and gas wells has the potential to disturb the quiescent clays and fines. Specific problems caused by disturbing shales, clays and fines include stuck drill pipe, time lost in redrilling shale that has sloughed into the borehole, difficulty in running casing, reduction of permeability of the formation, and the like.

For example, to remove cuttings produced during a well drilling operation, a drilling fluid is circulated down the drill pipe and up the annulus between the drill pipe and the formation whereby the cuttings are carried to the surface. The cuttings are then shaken out of the drilling fluid and the fluid is recirculated. In addition to removing the cuttings, the drilling fluid also serves to coat and lubricate the drill bit and to stabilize the formation.

In some areas, formations known as heaving or sloughing shales are penetrated during a well drilling operation. These shales have a tendency to swell or crack upon contact with the drilling fluid whereupon the bore hole walls are rendered unstable and the heaving shale material, which makes up such walls, sloughs into the bore hole. Sloughing of shale material into the bore hole can cause the drill stem to become stuck and can enlarge the bore hole with the result that large subterranean cavities are formed. Furthermore, where sloughing occurs while the drilling bit is being changed at the surface, the bore hole fills up and must be cleared before drilling can proceed. In addition, the heaving shale material taken up into the drilling fluid adversely affects the viscosity characteristics of the drilling fluid. As colloidal sized particles become dispersed in a well fluid, the viscosity and density of the well fluid tends to increase to the point where the fluid must be chemically treated to reduce the viscosity thereof or it must be diluted followed by the addition of weighting material to maintain a given mud weight.

As another example, in a steam drive operation, steam is injected via one well and acts as a drive fluid to push oil through the formation to one or more offset wells. In a steam soaking operation, steam is injected via a well, the well is then shut in temporarily and allowed to soak, and subsequently production is commenced from the same well. In either instance, when steam reaches the subterranean formation, it at least partially condenses, thus exposing the formation to fresh water. Even though steam may act to mobilize the oil in the formation, if the formation contains water-sensitive shales, clays or fines, the permeability of the formation can be reduced.

Other formation treatment operations such as fracturing, acidizing, perforating, waterflooding, as well as others, can disturb the clays and fines causing a loss of formation permeability.

As the destabilizing interaction of water and water- sensitive shale, clays and fines is a long known and troublesome problem, there have been many solutions suggested in the art of well fluids.

It is believed by some that for certain well fluids osmosis and osmotic pressure forces tend to induce transfer of water from the well fluid to the layers of interstices within the shale, and that, accordingly, a use of salts that provide a high osmotic pressure will stabilize the formation. For example, US-A 2,802,783 discloses saturating an aqueous drilling fluid with calcium hydroxide; US-A-3.017,351 discloses incorporating into the drilling fluid an acetate salt of an amide of a fatty acid and a polyamine along with ammonium sulfate, oil and an acrylamide polymer hydrolyte; US-A-4,341,645 discloses salts of copolymers of acrylic acid and hydroxypropyl acrylate; and US-A-4,299,710 discloses the combination of an acid-containing polymer and a polysaccharide wherein the acid-containing polymer can be a copolymer of any one of a long list of unsaturated carboxylic acids, including acrylic acid or a half-amide of a dicarboxylic acid, with any one of a long list of vinyl monomers, including 2-hydroxyethyl and hydroxypropyl acrylates.

While the use of salts that provide a high osmotic pressure will under certain circumstances provide some stabilization to a formation, it will not help in all cases.

Accordingly, osmosis is not believed to be a total explanation for the problems involved in drilling water-sensitive shale. Garrison, in US-A-2,165,824, noted that such an interaction involves more than osmosis and, accordingly, a use of salts that provide a high osmotic pressure, i.e., an inhibited aqueous drilling fluid, will not prevent either the heaving or dispersing of the shale. Garrison suggests using a relatively concentrated aqueous solution of an alkali metal silicate. However, it is disadvantageously expensive to maintain an alkali metal silicate as a circulating drilling fluid.

Another prior art idea has been to convert clay from a swelling form by cation exchange to a less swelling form, by the addition of various known salts to the aqueous fluids utilized in the various treatment methods. Salts such as potassium chloride, sodium chloride, ammonium chloride and the like are typically dissolved in the aqueous fluid utilized to effect formation treatment. While these salts are effective at protecting the formation, they can be detrimental to the performance of other constituents of the treatment fluid. Furthermore, it is difficult to dissolve the various salts in well fluids due to the inability to effect adequate mixing for the large volumes of salts required in commercially available mixing equipment utilized in oil field services. Therefore, the salts are typically admixed with the aqueous well fluid before admixture of any other well fluid additives. These salts, however, may have a detrimental effect upon other well fluid additives.

Other ideas for minimizing shale and clay swelling include the use in well fluids of nitrogen base compounds as described in US-A-2,761,835 and 2,761,843, or by the use in treatment fluids of water-soluble anionic, cationic or non-ionic surfactants. Discloses in US-A-4,842,073 and 5,089,151 are the use in a well fluid of tetra alkyl ammonium salts.

Other inventors have described combinations of carboxyl group containing polymeric materials that are designed to handle clay dispersion problems. These solutions relate to clear or low solids drilling fluids or clay-containing drilling muds in which the types and amounts of the polymeric materials are adapted to effect a dispersion of the viscosity-adjusting bentonitic type clays while tending to flocculate and enhance the removal of the other clays, such as those encountered in drilling operations. As is known to those skilled in the art, such clay beneficiating and flocculating aqueous polymer systems are not suited for drilling in water sensitive shales and are generally no more effective than a simple aqueous clay mud with respect to stabilizing a borehole in a water sensitive shale.

US-A-5,076,373 discloses a shale stabilizing drilling fluid comprising an acrylic polyol, a monoalicyclicpolyol or a cyclicetherpolyol, and a partially hydrolyzed polyacrylamide with 20 to 50 percent hydrolysis.

While each of the prior art treatment methods to stabilize water-sensitive shales, clays and fines in a formation have met with some success in particular£ applications, the need exists for a further improved well fluid additive for stabilizing such water-sensitive shales, clays and fines, during well operations.

According to one embodiment of the present invention there is provided a well fluid additive for treating subterranean reservoirs having water-sensitive clays, shales or fines. The additive generally includes at least one of polyvinylpyrrolidone, polyvinylalcohol, partially hydrolyzed polyacrylamide, starches, or cellulosic material. The additive additionally includes a non-foaming amphoteric surfactant.

According to another embodiment of the present invention there is provided a well fluid comprising an aqueous component and including the well fluid additive described above.

According to still another embodiment of the present invention there is provided a method of stabilizing a subterranean formation penetrated by a borehole and having water-sensitive shales, clays or fines. The method generally includes introducing a formation treatment fluid into the borehole and into contact with the formation, wherein the formation treatment fluid comprises at least one of polyvinylpyrrolidone, polyvinylalcohol, a partially hydrolyzed polyacrylamide, starches, or a cellulosic material and a non-foaming amphoteric surfactant.

Optionally, in the above embodiments, the well fluid additive, the well fluid, and the treatment fluid utilized in the above method, can all further contain a water-soluble alcohol.

According to even another embodiment of the present invention there is provided a well fluid additive. This well fluid additive generally includes a cellulosic material, starches, polyvinylpyrrolidone or polyvinylalcohol and a water soluble alcohol.

According to still yet another embodiment of the present invention there is provided a well fluid comprising an aqueous component, either a cellulosic material, starches, polyvinylpyrrolidone or polyvinylalcohol, and a water soluble alcohol.

According to even yet another embodiment of the present invention there is provided a method of stabilizing a subterranean formation penetrated by a borehole having water-sensitive materials. The method generally includes introducing a formation treatment fluid into the borehole and into contact with the formation, wherein the 'formation treatment fluid generally includes a cellulosic material, starches, polyvinylpyrrolidone or polyvinylalcohol, and a water soluble alcohol.

The well additive of the present invention generally includes a polymer and will further include a water soluble or near water soluble alcohol and/or an amphoteric surfactant. This well fluid additive finds utility in a broad range of well fluids in which it is desirable to stabilize water-sensitive shales, clays and other fines.

In the practice of the drilling method of the present invention, the drill string is rotated to cut a borehole into the earth while circulating a drilling fluid down through the drill string and thence up the annulus between the drilling string and the wall of the borehole. The drilling fluid utilized in the drilling method of the present invention will comprise an aqueous component and the additive of the present invention of polymer and a alcohol and/or a surfactant.

The aqueous medium employed in the well fluids of the present invention may be any kind of water from any source including, but not limited to, fresh water, sea water, water from the subterranean reservoir, sea water, or a natural or synthetic brine.

Polymers suitable to be utilized in the present invention will generally be water soluble. The polymers of the present invention preferably also have good wetting properties and a reasonable rate of dissolution in water for convenient use in the field. They should also afford particularly oil and gas wells. Additionally, it is preferable that the polymer be capable of encapsulating the water-sensitive shale, clay or other fines. It is also preferable that the polymer have suitable thermal stability for the environment in which they well fluids are employed. This generally means thermal stability up to and exceeding 2500F. It is also preferably that the polymer have suitable resistance to hydrolysis under high Ph, generally in the range of about 9 to about 11. Where necessary to achieve proper water solubility and other suitable properties, the polymers of the present invention may be hydrolyzed. For example, polyvinylpyrrolidone will generally be sixty percent or more hydrolyzed. Finally, it is also preferred that the polymers of the present invention have good tolerance to drilled solids contamination.

Examples of polymers suitable for use in the present invention include polyvinylpyrrolidone, polyvinylalcohol, starches, cellulosic derivatives, polyanionic cellulose, polysaccharides, and partially hydrolyzed polyacrylamides. Derivatitized starches such as substituted and non-substituted alkyl starches, especially hydroxy propyl starches may be utilized as the polymer in the practice of the present invention.

The polyvinylpyrrolidone utilized in the present invention may be prepared by any suitable method known to those of skill in the art. The average molecular weight of the polyvinylpyrrolidone must be suitable for effective encapsulation of the drill cuttings and water sensitive shale, clay or fines. The higher end of the molecular weight range is generally dictated by solubility and viscosity limitations. Generally, the average molecular weight of the polyvinylpyrrolidone utilized in the present invention will be at least 10000, preferably in the range of about 10000 to about 1,500,000, more preferably in the range of about 500,000 to about 1,200,000, and most preferably in the range of about 750,000 to about 1,000,000.

The polyvinylalcohol of the present invention may be prepared by any suitable method known to those of skill in the art. The molecular weight of the polyvinylalcohol must be suitable for effective encapsulation of the drill cuttings and water sensitive shale, clay or fines. The higher end of the molecular weight range is generally dictated by solubility and viscosity limitations. Generally, the average molecular weight of the polyvinylalcohol utilized in the present invention will be at least 50,000, preferably in the range of about 50,000 to about 200,000, more preferably in the range of about 100,000 to about 175,000, and most preferably in the range of about 125,000 to about 175,000. Polyvinylalcohols suitable for use in the present invention will have a percent hydrolysis of at least 60 percent, and preferably in the range of about 80 to about 99 percent. Polyvinylalcohol may be utilized in solid or solution form.

The partially hydrolyzed polyacrylamides useful in the practice of the present invention may be obtained by any suitable method known to those of skill in the art. One suitable method generally involves polymerizing and subsequently hydrolyzing acrylamide (or a lower homolog of acrylamide) or copolymerizing acrylamide with an acrylate, or the like. The range of hydrolysis (and/or the proportion of the amide groups of the polyacrylamide that are carboxyl groups or have been hydrolyzed to form carboxyl groups) should be greater than about 20 percent. Preferably, the partially hydrolyzed polyacrylamide polymer will have a percent hydrolysis in the range of about 30 to about 50 percent. The molecular weight of the partially hydrolyzed polyacrylamide will be in the range of about 500,000 to about 20,000,000.

The term "partially hydrolyzed polyacrylamide" will generally include polyacrylamides as will as copolymers of acrylamide with other suitable monomers and polymers. Examples of other suitable polymers useful as partially hydrolyzed polyacrylamides includes partially hydrolyzed acrylamide/acrylate copolymers, partially hydrolyzed acrylamide/acrylic acid copolymers, and partially hydrolyzed acrylamide/styrene sulfonic acid copolymers.

The alcohol soluble component of the well fluid additive of the present invention is generally selected from among water-soluble or poorly water insoluble alcohols and derivatives thereof. Such water-soluble or poorly water insoluble alcohols include mono-, di-, tri- and poly-hydric alcohols. Non-limiting examples of classes of alcohols suitable for use in the present invention include glycols, glycerols, sorbitols, and derivatives thereof.

Polyglycols suitable for use as the alcohol component of the present invention generally have a molecular weight that will render the polyglycol sufficiently water soluble or poorly water insoluble and of proper viscosity so as not to inhibit preparation and handling. Generally for most polypropyleneglycols, this means a molecular weight in the range of about 100 to about 1200. Accordingly, it is believed that for most polyglycols, a molecular weight above about 1200 will have a tendency to be water insoluble or at least not sufficiently water soluble for use in the present invention. Of course, in those instances where a certain polyglycol may have a molecular weight outside of the above range and still be suitable, it may certainly be utilized.

The alcohol component of the present invention may be a di-hydroxy alcohols, such as polyalkylene glycols, particularly polypropylene glycol. The alcohol component may also be a propoxylated tri-hydroxy alcohol such as polyalkylene glycerols, particularly polypropylene glycerol. Ethylene oxide propylene oxide copolymers of di-hydroxy and tri-hydroxy alcohols may also be utilized as the alcohol component.

Polypropylene glycols having a molecular weight in the range of about 200 to about 600 are most preferred for use as the alcohol component.

In the practice of the present invention when a water soluble component is utilized, the well fluid additive will generally comprise in the range of about 1 to about 99 volume percent water soluble component. Preferably, the well fluid additive will comprise in the range of about 5 to about 90 volume percent water soluble component. More preferably, the well fluid additive will comprise in the range of about 10 to about 80 volume percent, and most preferably in the range of about 30 to about 70 volume percent non-water soluble component.

The surfactant utilized in the practice of the present invention is selected from the class of surfactants known as betaines, which are themselves a special class of zwitterions. As a class, betaines are best known as foaming agents in products such as shampoos. Of course, foaming would be detrimental to drilling operations. Thus, it would be quite unexpected that a betaine would be suitable for use in a drilling fluid additive. Obviously, the betaines utilized in the present invention must not cause the well fluid to foam.

Suitable betaines can be selected by utilizing a simple foaming efficiency test.

The betaine utilized in the present invention may be mixed with the polymer, substituted onto the polymer, or copolymerized therein. Polymers made from betaine monomers and processes for their making are well known and are disclosed in US-A-4,742,135.

Preferred betaine polymers useful in the present invention include copolymers of acrylamide and vinylpyrrolidone with betaine. Such betaine polymers may be formed by a homogeneous, free radical, polymerization.

A particularly preferred betaine polymer is N-3 sulfopropyl-N-methacryloxyethyl-N, N-dimethyl ammonium betaine which is commercially available as SPE from Rachig Company of Germany. The polymeric betaine may be utilized in solid or liquid form.

Other commercially available suitable liquid based surfactants include Mirataine ASC, an alkylether hydroxypropyl sultaine from Rhone-Poulenc, and Mafo 13 from PPG.

The relative amounts of the components of the well fluid additive of the present invention are generally selected to provide compatibility with each other and with the well fluid, and to provide suitable shale, clay or fines stabilization.

Generally, based on the total weight of the well fluid additive, the well fluid additive of the present invention will comprise in the range of about 0.1 to about 50 weight percent polymer, in the range of about 0 to about 80 weight percent alcohol and in the range of about 0 to about 60 weight percent amphoteric surfactant. Preferably, the well fluid comprises in the range of about 5 to about 25 weight percent polymer, in the range of about 10 to about 70 weight percent alcohol and in the range of about 10 to about 40 weight percent amphoteric surfactant, and most preferably in the range of about 10 to about 20 weight percent polymer, in the range of about 20 to about 50 weight percent alcohol and in the range of about 20 to about 30 weight percent amphoteric surfactant.

In the practice of the present invention, the well fluid additive is generally added to the well fluid in an amount in the range of about 3.5 to about 70 pounds/bbl well fluid.

It is also to be understood that other additives used by those of skill in the art may also be added to the drilling fluids of the present invention, as long as they do not have a substantial detrimental effect on the well fluid, including but not limited to for example, surfactants, weighting materials, breakers, loss circulation additives and salts.

EXAMPLES

Example 1 : Weight-Up Study - Effect of Betaine on PVP

Drilling fluids were prepared utilizing polyvinylpyrrolidone as the polymer by mixing various components in the proportions shown in the following TABLE 1. The experiment was a weight-up

TABLE 1

Weight-Up Study – Effect of Betaine Upon PVP Drilling Fluid

| MATERIALS | A-1 | A-2 | A-3 | A-4 | B-1 | B-2 | B-3 | B-3 |
|---|---|---|---|---|---|---|---|---|
| Seawater, bbl | 0.93 | 0.86 | 0.79 | 0.71 | 0.93 | 0.86 | 0.79 | 0.71 |
| Caustic soda, bbl | 0.5 | 0.5 | 0.5 | 0.5 | 0.5 | 0.5 | 0.5 | 0.5 |
| MTM PVP, lb | 2.0 | 2.0 | 2.0 | 2.0 | 2.0 | 2.0 | 2.0 | 2.0 |
| LD-8, lb | 0.05 | 0.05 | 0.05 | 0.05 | 0.05 | 0.05 | 0.05 | 0.05 |
| MIL-PAC LV, lb | 2.0 | 2.0 | 2.0 | 2.0 | 2.0 | 2.0 | 2.0 | 2.0 |
| XCD Polymer, lb | 0.75 | 0.5 | 0.25 | 0.1 | 0.75 | 0.5 | 0.25 | 0.1 |
| Mirataine ASC, lb | | | | | 7.0 | 7.0 | 7.0 | 7.0 |
| MIL-BAR, lb | 94 | 204 | 314 | 421 | 94 | 204 | 314 | 421 |
| REV-Dust, lb | 40 | 40 | 40 | 40 | 40 | 40 | 40 | 40 |
| **PROPERTIES** | | | | | | | | |
| Mud Density lb/gal | 10 | 12 | 14 | 16 | 10 | 12 | 14 | 16 |
| Apparent Viscosity, cp | 28 | 40 | 37 | 63 | 24 | 42 | 46 | 68.5 |
| Plastic Viscosity, cp | 20 | 32 | 30 | 57 | 18 | 31 | 39 | 59 |
| Yield Point, lb/100 sqft. | 16 | 16 | 14 | 12 | 12 | 22 | 14 | 16 |
| 10-sec Gel, lb/100 sqft. | 3 | 4 | 3 | 4 | 3 | 4 | 4 | 4 |
| 10-min Gel, lb/100 sqft | 5 | 6 | 5 | 6 | 4 | 6 | 5 | 6 |
| API Fluid Loss, ml | 7.8 | 6.8 | 6.6 | 6.0 | 7.4 | 5.2 | 5.0 | 5.8 |

study to show the effect of betaine upon a polyvinylpyrrolidone ("PVP") drilling fluid. The polyvinylpyrrolidone utilized is available from MTM Research Chemicals. The betaine utilized was Mirataine ASC, an alkylether hydroxypropyl sultaine available from Rhone-Poulenc. The drilling fluid was stirred for 45 minutes. The drilling fluids were then rolled at 2500F for 16 hours. The results are presented in TABLE 1. In TABLE 1, the sample series A 1-4 are without betaine, sample series B 1-4 are all with betaine. Samples with like numbers are to be compared. For example, A-1 is compared to B-1, and A-2 is compared to B-2, etc. Of the various results shown in, it is noted that the API fluid loss shows an improvement.

The data also indicate that the betaine is compatible with PVP in weight-up to 16 1b/gal.

## Example 2: Comparative Solids Contamination of PVP

Drilling fluids were prepared utilizing polyvinylpyrrolidone as the polymer by mixing various components in the proportions shown in thwe following TABLE 2. The experiment was a comparative solids contamination study to show the effect of betaine upon a polyvinylpyrrolidone ("PVP") drilling fluid at various contamination levels. To simulate drilled solids conatmination, Rev-Dust was added to the mixture at 201b increments. The polyvinylpyrrolidone utilized is available from MTM Research Chemicals. The betaine utilized was Mirataine ASC, an alkylether hydroxypropyl sultaine available from Rhone-Poulenc. The drilling fluid was stirred for 45 minutes.

The results are presented in Table 2. Overall, the data show that the betaine improves the yield point and the 10-min Gel properties. Yield point was unchanged at no loading of the Rev-Dust, and showed an improvement at 20, 60 and 80 pounds loading of Rev-Dust. 10-min Gel was unchanged at 0 and 20

EP 0 668 339 A1

## TABLE 2

### Solids Contamination Study – Effect of Betaine Upon PVP Drilling Fluid

| MATERIALS | A-1 | A-2 | A-3 | A-4 | A-5 | B-1 | B-2 | B-3 | B-4 | B-5 |
|---|---|---|---|---|---|---|---|---|---|---|
| Seawater, bbl | 1.0 | 1.0 | 1.0 | 1.0 | 1.0 | 1.0 | 1.0 | 1.0 | 1.0 | 1.0 |
| MTM PVP, lb | 2.0 | 2.0 | 2.0 | 2.0 | 2.0 | 2.0 | 2.0 | 2.0 | 2.0 | 2.0 |
| LD-8, lb | 0.05 | 0.05 | 0.05 | 0.05 | 0.05 | 0.05 | 0.05 | 0.05 | 0.05 | 0.05 |
| BIO-LOSE, lb | 2.0 | 2.0 | 2.0 | 2.0 | 2.0 | 2.0 | 2.0 | 2.0 | 2.0 | 2.0 |
| XCD Polymer, lb | 0.75 | 0.75 | 0.75 | 0.75 | 0.75 | 0.75 | 0.75 | 0.75 | 0.75 | 0.75 |
| Mirataine ASC, lb |  |  |  |  |  | 7.0 | 7.0 | 7.0 | 7.0 | 7.0 |
| MIL-BAR, lb | 50 | 50 | 50 | 50 | 50 | 50 | 50 | 50 | 50 | 50 |
| REV-Dust, lb |  | 20 | 40 | 60 | 80 |  | 20 | 40 | 60 | 80 |
| PROPERTIES |  |  |  |  |  |  |  |  |  |  |
| Apparent Viscosity, cp | 14 | 17 | 18.5 | 22 | 26 | 16 | 17.5 | 20 | 21 | 26 |
| Plastic Viscosity, cp | 8 | 10 | 11 | 14 | 16 | 10 | 12 | 12 | 14 | 17 |
| Yield Point, lb/100 sqft. | 12 | 14 | 15 | 16 | 20 | 12 | 11 | 16 | 14 | 18 |
| 10-sec Gel, lb/100 sqft. | 3 | 4 | 4 | 6 | 6 | 3 | 4 | 5 | 5 | 5 |
| 10-min Gel, lb/100 sqft | 4 | 5 | 5 | 7 | 7 | 4 | 5 | 6 | 6 | 6 |
| API Fluid Loss, ml | 5.6 | 5.4 | 6.2 | 6.8 | 8.0 | 5.2 | 6.0 | 6.2 | 7.2 | 7.6 |

pounds loading of Rev-Dust and showed an improvement at 60 and 80 pounds loading of Rev-Dust.

### Example 3: Comparison of PVA Products

Drilling fluids were prepared utilizing polyvinylalcohol ("PVA") as the polymer by mixing various components in the proportions shown in the following TABLE 3. The various PVA products were PVA Airvol 540S available from Air Products, and three other commercially available PVAs. The experiment was a rolling erosion study to determine if there are any differences between the various commercially available PVA products. The drilling fluids were stirred for 45 minutes. To each sample was added 25g of HOLE-PLUG. The samples were then rolled 16 hours at 2500F. Afterwards, the samples were screened through an 18 mesh sieve. The remaining HOLE- PLUG was washed, dried for four hours at 2500F, and weighed. Percent erosion was calculated, assuming an initially determined moisture content of 8.8%.

### Example 4 PVA Drilling Fluid

Drilling fluids were prepared utilizing polyvinylalcohol ("PVA"), PVA 540S, as the polymer by mixing various components in the proportions shown in the following TABLE 4. Examples 1-4 were subjected to increasing weight-up as MIL-BAR was increased. Examples 5-9 were subjected to increasing solids contamination as Rev-Dust was incremented 20 pounds per sample. The drilling fluid samples were stirred for 45 minutes and then rolled for 16 hours at 2500F. The results are presented in TABLE 4.

### Example 5: Betaine With Various Polymers - Seawater Base

Drilling fluids were formulated as shown in TABLE 5 using seawater only, and with PVP, PVA, or partially hydrolyzed polyacrylamide polymer (PHPA) both with and without betaine. The base fluid was seawater.

## TABLE 3 - Comparison of PVA Products - Rolling Erosion Study

| MATERIALS | 540S | 7120-40s | 7130-07 | 7130-40 |
|---|---|---|---|---|
| Seawater, bbl | 0.86 | 0.86 | 0.86 | 0.86 |
| PVA Airvol 540S (Air Products), lb | 2.0 | | | |
| Commercial PVA No. 1 | | 2.0 | | |
| Commercial PVA No. 2 | | | 2.0 | |
| Commercial PVA No. 3 | | | | 2.0 |
| Caustic soda, bbl | 0.5 | 0.5 | 0.5 | 0.5 |
| MIL-PAC LV, lb | 2.0 | 2.0 | 2.0 | 2.0 |
| Biozan, lb | 0.75 | 0.75 | 0.75 | 0.75 |
| Mirataine ASC, lb | 7.0 | 7.0 | 7.0 | 7.0 |
| MIL-BAR, lb | 204 | 204 | 204 | 204 |
| **PROPERTIES** | | | | |
| Apparent Viscosity, cp | 37 | 36.5 | 37 | 36.5 |
| Plastic Viscosity, cp | 24 | 23 | 21 | 22 |
| Yield Point, lb/100 sqft. | 26 | 27 | 32 | 29 |
| 10-sec Gel, lb/100 sqft. | 7 | 7 | 9 | 9 |
| 10-min Gel, lb/100 sqft | 10 | 10 | 11 | 11 |
| API Fluid Loss, ml | 3.4 | 4.0 | 6.8 | 4.5 |
| HOLE-PLUG, g (after wash and dry) | 20.4 | 18.3 | 16.7 | 18.6 |
| % Erosion Loss | 10.5 | 20.2 | 26.8 | 18.9 |

EP 0 668 339 A1

## TABLE 4

### Weight-Up and Solids Contamination For PVA Drilling Fluid

| MATERIALS | 1 | 2 | 3 | 4 | 5 | 6 | 7 | 8 | 9 |
|---|---|---|---|---|---|---|---|---|---|
| Seawater, bbl | 0.93 | 0.86 | 0.79 | 0.71 | 1.0 | 1.0 | 1.0 | 1.0 | 1.0 |
| PVA 540S, lb | 2.0 | 2.0 | 2.0 | 2.0 | 2.0 | 2.0 | 2.0 | 2.0 | 2.0 |
| LD-8, lb | 0.05 | 0.05 | 0.05 | 0.05 | 0.05 | 0.05 | 0.05 | 0.05 | 0.05 |
| Caustic Soda, lb | 0.5 | 0.5 | 0.5 | 0.5 | | | | | |
| BIO-LOSE, lb | | | | | 2.0 | 2.0 | 2.0 | 2.0 | 2.0 |
| MIL-PAC LV, lb | 2.0 | 2.0 | 2.0 | 2.0 | | | | | |
| XCD Polymer, lb | | | | | 0.75 | 0.75 | 0.75 | 0.75 | 0.75 |
| Biozan, lb | 1.0 | 0.75 | 0.5 | 0.3 | | | | | |
| Mirataine ASC, lb | 7.0 | 7.0 | 7.0 | 7.0 | | | | | |
| MIL-BAR, lb | 94 | 204 | 314 | 421 | 50 | 50 | 50 | 50 | 50 |
| REV-Dust, lb | 40 | 40 | 40 | 40 | | 20 | 40 | 60 | 80 |
| **PROPERTIES** | | | | | | | | | |
| Apparent Viscosity, cp | 29 | 36 | 50 | 54.5 | 9 | 9 | 10.5 | 13.5 | 14.5 |
| Plastic Viscosity, cp | 21 | 24 | 38 | 42 | 7 | 7 | 8 | 10 | 11 |
| Yield Point, lb/100 sqft. | 16 | 22 | 24 | 25 | 4 | 4 | 5 | 7 | 7 |
| 10-sec Gel, lb/100 sqft. | 5 | 5 | 5 | 5 | 2 | 2 | 2 | 2 | 2 |
| 10-min Gel, lb/100 sqft | 6 | 6 | 6 | 6 | 3 | 3 | 3 | 3 | 3 |
| API Fluid Loss, ml | 7.8 | 6.8 | 6.0 | 5.5 | 4.0 | 6.0 | 7.2 | 8.1 | 9.3 |

The PVP utilized in this example was Luviskol K-90 from BASF. The PVA utilized in this example is available from MTM Research Chemicals, and the PHPA utilized is NEW DRILL PLUS (Trade Mark) available from

EP 0 668 339 A1

Baker Hughes Inteq.

The samples were stirred for 45 minutes. The samples were then rolled for four hours at 1500F after which time 25g of HOLE-PLUG was added to each sample. Next the samples were rolled for 16 hours at 2500F and then sieved on an 18-mesh screen. The remaining HOLE-PLUG was washed, dried for four hours at 2500F, and weighed. Percent erosion was calculated, assuming an initially determined moisture content of 8.8%.

The results are presented in TABLE 5 wherein the "A" series of samples is without betaine, and the "B.' series is with betaine. Numbers 1 are with PVP, numbers 2 are with PVA, numbers 3 are with PHPA, and numbers 4 are without polymer. The drilling fluid samples are identical except for varying the type of polymer and the presence of absence of betaine.

The presence of betaine improved the percentage of erosion loss for PVA, PHPA and the seawater. The erosion loss for PVP remained unchanged.

The presence of betaine improved the API fluid loss data for PVP, PVA and seawater without polymer, with the API fluid loss data for PHPA not changing.

The stability of the yield point data and the 10-min gel data was very similar with or without betaine.

Example 6: Betaine With Various Polymers - Freshwater Base

Drilling fluids were formulated as shown in TABLE 6 using freshwater with PVP, PVA, or partially hydrolyzed polyacrylamide polymer ("PHPA"), both with and without betaine.

TABLE 5  Comparison of Polymers in Seawater Base - Rolling Erosion Study

| MATERIALS | A-1 | A-2 | A-3 | A-4 | B-1 | B-2 | B-3 | B-4 |
|---|---|---|---|---|---|---|---|---|
| Seawater, bbl | 0.86 | 0.86 | 0.86 | 0.86 | 0.86 | 0.86 | 0.86 | 0.86 |
| Luviskol K-90, lb | 2.0 | | | | 2.0 | | | |
| MTM PVA, lb | | 2.0 | | | | 2.0 | | |
| NEW-DRILL PLUS, lb | | | 2.0 | | | | 2.0 | |
| Caustic soda, bbl | 0.5 | 0.5 | 0.5 | 0.5 | 0.5 | 0.5 | 0.5 | 0.5 |
| MIL-PAC LV, lb | 2.0 | 2.0 | 2.0 | 2.0 | 2.0 | 2.0 | 2.0 | 2.0 |
| Biozan, lb | 0.75 | 0.75 | 0.75 | 0.75 | 0.75 | 0.75 | 0.75 | 0.75 |
| Mirataine ASC, lb | | | | | 7.0 | 7.0 | 7.0 | 7.0 |
| MIL-BAR, lb | 204 | 204 | 204 | 204 | 204 | 204 | 204 | 204 |
| **PROPERTIES** | | | | | | | | |
| Apparent Viscosity, cp | 33 | 24.5 | 39 | 27.5 | 35.5 | 32 | 34 | 34 |
| Plastic Viscosity, cp | 22 | 16 | 26 | 16 | 25 | 20 | 23 | 22 |
| Yield Point, lb/100 sqft. | 22 | 17 | 26 | 23 | 21 | 24 | 22 | 24 |
| 10-sec Gel, lb/100 sqft. | 5 | 3 | 5 | 6 | 4 | 5 | 5 | 8 |
| 10-min Gel, lb/100 sqft | 7 | 4 | 7 | 7 | 6 | 7 | 6 | 11 |
| API Fluid Loss, ml | 7.8 | 10.6 | 3.4 | 96 | 5.4 | 5.8 | 3.4 | 18 |
| HOLE-PLUG, g (after wash and dry) | 20.7 | 18.2 | 11.2 | 7.9 | 20.7 | 18.6 | 19.7 | 14.6 |
| % Erosion Loss | 9.2 | 20.2 | 50.9 | 65.4 | 9.2 | 18.4 | 13.6 | 36.0 |

The base fluid was freshwater.

The PVP utilized in this example was Luviskol K-90 from BASF. The PVA utilized in this example is available from MTM Research Chemicals, and the PHPA utilized is NEW DRILL PLUS (Trade Mark), available from Baker Hughes Inteq.

The samples were stirred for 45 minutes. The samples were then rolled for four hours at 150 degrees F, after which time the samples were rolled for 16 hours at 250 degrees F and then sieved on an 18-mesh screen. The remaining HOLE-PLUG was washed, dried for four hours at 250 degrees F, and weighed. Percent erosion was calculated, assuming an initially determined moisture content of 8.8%.

The results are presented in TABLE 6 wherein the "A" series of samples is without betaine, and the "B" series is with betaine. Numbers 1 are freshwater with PVP, numbers 2 are with PVA, and numbers 3 are with PHPA. The drilling fluid samples are identical except for varying the type of polymer and the presence of absence of betaine.

In the presence of betaine, PHPA showed an improvement in erosion loss data, yield point data, and 10-min gel data.

Example 7: Comparison of Polymers in Freshwater With Inhibitive Salts

Drilling fluids were formulated as shown in TABLE 7 using freshwater with PVP, PVA, or partially hydrolyzed polyacrylamide polymer ("PHPA"), both with and without betaine. Potassium carbonate and gypsum were added as inhibitive salts.

The samples were stirred for 45 minutes. Next, 25g of HOLE-PLUG was added to the samples, which were then rolled for 16 hours at 250 degrees F, and then sieved on an 18- mesh screen. The

TABLE 6    Comparison of Polymers with Freshwater Base – Rolling Erosion Study

| MATERIALS | A-1 | A-2 | A-3 | B-1 | B-2 | B-3 |
|---|---|---|---|---|---|---|
| Freshwater, bbl | 0.86 | 0.86 | 0.86 | 0.86 | 0.86 | 0.86 |
| Luviskol K-90, lb | 1.0 | | | 1.0 | | |
| MTM PVA, lb | | 1.0 | | | 1.0 | |
| NEW-DRILL PLUS, lb | | | 1.0 | | | 1.0 |
| Caustic soda, bbl | 0.1 | 0.1 | 0.1 | 0.1 | 0.1 | 0.1 |
| MIL-PAC LV, lb | 1.0 | 1.0 | 1.0 | 1.0 | 1.0 | 1.0 |
| Biozan, lb | 0.3 | 0.3 | 0.3 | 0.3 | 0.3 | 0.3 |
| Mirataine ASC, lb | | | | 7.0 | 7.0 | 7.0 |
| MIL-BAR, lb | 204 | 204 | 204 | 204 | 204 | 204 |
| **PROPERTIES** | | | | | | |
| Apparent Viscosity, cp | 86 | 92 | 50 | 94 | 85.5 | 48.5 |
| Plastic Viscosity, cp | 58 | 59 | 44 | 63 | 54 | 41 |
| Yield Point, lb/100 sqft. | 56 | 66 | 12 | 62 | 63 | 15 |
| 10-sec Gel, lb/100 sqft. | 17 | 25 | 3 | 22 | 19 | 3 |
| 10-min Gel, lb/100 sqft | 30 | 36 | 6 | 34 | 28 | 7 |
| API Fluid Loss, ml | 10.2 | 10.6 | 6.5 | 10.6 | 14.4 | 6.6 |
| HOLE-PLUG, g (after wash and dry) | 1.6 | 1.4 | 0.6 | 0.2 | 2.3 | 12.6 |
| % Erosion Loss | 93.0 | 93.9 | 97.4 | 99.1 | 90 | 44.7 |

remaining HOLE-PLUG was washed, dried for four hours at 250 degrees F, and weighed. Percent erosion was calculated, assuming an initially determined moisture content of 8.8%. The results are presented in TABLE 7. The "A" series of samples contain potassium carbonate as the inhibitive salt. The "B" series of samples contain gypsum as the inhibitive salt. Sample numbers 1 contain PVP, sample numbers 2 contain PVA, and sample numbers 3 contain PHPA.

Example 8: Evaluation of Glycol in PVP1 PVA and PHPA Seawater System

Drilling fluids were formulated as shown in TABLE 8 using seawater with PVP, PVA, or partially hydrolyzed polyacrylamide polymer ("PHPA"), using none, one or both of betaine and glycol.

The PVP utilized was K-90 from BASF. The PVA utilized was Airvol 540S from Air Products, and the PHPA was NEW-DRILL PLUS available from Baker Hughes Inteq. The betaine used was Mirataine ASC from Rhone-Poulenc. The glycol was Glycol No. 3192 available from Baker Performance Chemicals.

The samples were stirred for 45 minutes. Next, 25g of HOLE-PLUG was added to the samples, which were then rolled for 16 hours at 250 degrees F, and then sieved on an 18-mesh screen. The remaining HOLE-PLUG was washed, dried for four hours at 250 degrees F, and weighed. Percent erosion was calculated, assuming an initially determined moisture content of 8.8%. The results are presented in TABLE 8. The "A" series of samples have neither betaine nor glycol. The "B" series of samples contain betaine. The "C" series of samples contain both betaine and glycol. Finally, the "D" series of samples contain glycol.

Sample numbers 1 contain PVP, sample numbers 2 contain PVA, old

TABLE 7  Comparison of Polymers in Freshwater Base With Inhibitive Salts

| MATERIALS | A-1 | A-2 | A-3 | B-1 | B-2 | B-3 |
|---|---|---|---|---|---|---|
| Freshwater, bbl | 0.86 | 0.86 | 0.86 | 0.86 | 0.86 | 0.86 |
| PVP K-90, lb | 0.6 | | | 0.6 | | |
| PVA Airvol 540S, lb | | 0.6 | | | 0.6 | |
| NEW-DRILL PLUS, lb | | | 0.6 | | | 0.6 |
| Caustic soda, bbl | 0.1 | 0.1 | 0.1 | 0.1 | 0.1 | 0.1 |
| Potassium carbonate, lb | 10 | 10 | 10 | | | |
| Gypsum, lb | | | | 6.0 | 6.0 | 6.0 |
| MIL-PAC LV, lb | 1.0 | 1.0 | 1.0 | 2.0 | 2.0 | 2.0 |
| Biozan, lb | 0.5 | 0.5 | 0.5 | 0.5 | 0.5 | 0.5 |
| Mirataine ASC, lb | | | | 7.0 | 7.0 | 7.0 |
| MIL-BAR, lb | 204 | 204 | 204 | 204 | 204 | 204 |
| **PROPERTIES** | | | | | | |
| Apparent Viscosity, cp | 8.5 | 13.5 | 12.5 | 48 | 44 | 48.5 |
| Plastic Viscosity, cp | 8 | 10 | 10 | 31 | 28 | 33 |
| Yield Point, lb/100 sqft. | 1 | 7 | 5 | 34 | 32 | 31 |
| 10-sec Gel, lb/100 sqft. | 1 | 2 | 1 | 8 | 7 | 7 |
| 10-min Gel, lb/100 sqft | 1 | 4 | 1 | 10 | 10 | 10 |
| API Fluid Loss, ml | 15.8 | 14 | 9.9 | 10.8 | 11.7 | 13.6 |
| HOLE-PLUG, g (after wash and dry) | 17.1 | 17.3 | 14.2 | 6.0 | 5.9 | 6.0 |
| % Erosion Loss | 25.0 | 24.1 | 37.7 | 73.7 | 74.1 | 73.7 |

EP 0 668 339 A1

EP 0 668 339 A1

sample numbers 3 contain PHPA, and samples number 4 are seawater without polymer.

TABLE 8    Glycol No. 3192 In Various Polymer Seawater Systems

| MATERIALS | A-1 | A-2 | A-3 | A-4 | B-1 | B-2 | B-3 | B-4 | C-1 | C-2 | C-3 | D-1 | D-2 | D-3 |
|---|---|---|---|---|---|---|---|---|---|---|---|---|---|---|
| Seawater, bbl | 0.86 | 0.86 | 0.86 | 0.86 | 0.86 | 0.86 | 0.86 | 0.86 | 0.86 | 0.86 | 0.86 | 0.86 | 0.86 | 0.86 |
| Caustic Soda, lb | 0.5 | 0.5 | 0.5 | 0.5 | 0.5 | 0.5 | 0.5 | 0.5 | 0.5 | 0.5 | 0.5 | 0.5 | 0.5 | 0.5 |
| PVP K-90, lb | 2.0 | | | | 2.0 | | | | 2.0 | | | 2.0 | | |
| PVA Airvol 540S, lb | | 2.0 | | | | 2.0 | | | | 2.0 | | | 2.0 | |
| NEW-DRILL PLUS, lb | | | 2.0 | | | | 2.0 | | | | 2.0 | | | 2.0 |
| MIL-PAC LV, lb | 2.0 | 2.0 | 2.0 | 2.0 | 2.0 | 2.0 | 2.0 | 2.0 | 2.0 | 2.0 | 2.0 | 2.0 | 2.0 | 2.0 |
| Biozan, lb | 0.75 | 0.75 | 0.75 | 0.75 | 0.75 | 0.75 | 0.75 | 0.75 | 0.75 | 0.75 | 0.75 | 0.75 | 0.75 | 0.75 |
| Mirataine ASC, lb | | | | | 7.0 | 7.0 | 7.0 | 7.0 | 7.0 | 7.0 | 7.0 | | | |
| Glycol No. 3192, lb | | | | | | | | | 17.5 | 17.5 | 17.5 | 17.5 | 17.5 | 17.5 |
| MIL-BAR, lb | 204 | 204 | 204 | 204 | 204 | 204 | 204 | 204 | 204 | 204 | 204 | 204 | 204 | 204 |
| **PROPERTIES** | | | | | | | | | | | | | | |
| Apparent Viscosity, cp | 33 | 24.5 | 39 | 27.5 | 35.5 | 32 | 34 | 34 | 35 | 32 | 49.5 | 47.5 | 44.5 | 60 |
| Plastic Viscosity, cp | 22 | 16 | 26 | 16 | 25 | 20 | 23 | 22 | 22 | 20 | 30 | 35 | 33 | 37 |
| Yield Point, lb/100 sqft. | 22 | 17 | 26 | 23 | 21 | 24 | 22 | 24 | 26 | 24 | 39 | 25 | 23 | 45 |
| API FLUID LOSS, ml | 7.8 | 10.6 | 3.4 | 96 | 5.4 | 5.8 | 3.4 | 18 | 2.4 | 3.6 | 5.0 | 5.6 | 6.0 | 2.4 |
| %Erosion Loss (calc on initial 8.8% moisture) | 9 | 20 | 51 | 65 | 9 | 18 | 14 | 36 | 0 | 11 | 22 | 0 | 0 | 37 |

18

In determining the effect of betaine only, comparison of the "A" series with the "B" series shows that erosion loss data is improved for PVA and PHPA and seawater, and PVP remains unchanged. The API fluid loss data shows improvement for PVP, PVA, seawater, and no change for PHPA. In determining the effect of glycol only, the "A" series is compared with the "D" series. Both the erosion loss data and the API Fluid Loss data show improvement for PVP, PVA and PHPA.

To determine the effect of the combination of betaine and glycol, over drilling fluids having neither, the "A" series is compared to the "C" series. The erosion loss data shows improvement for PVP, PVA and PHPA. The API Fluid Loss data shows improvement for PVP and PVA. To determine the existence of a "synergistic" effect of using both glycol and betaine, the "B", "C" and "D" series are all examined together.

For the API fluid loss data for PVP, betaine yields 5.4 ml/30min/100psi and PVP yields 5.6 ml/30min/100psi. Surprisingly, the combination yields 2.4 ml/30min/100psi which combination is better than each separately.

A similar observation is made for the API fluid loss data for PVA. With betaine, the PVA API fluid loss is 5.8ml/30min/100psi, and with glycol, the PVA API fluid loss is 6.0. Again, surprisingly, the combination yields 3.6.

Example 9: Evaluation of Glycol 3192 With Various Polymers in 10% KCl and 20% NaCl

Drilling fluids were formulated as shown in TABLE 9A and TABLE 9B using 10% Kcl water and 20% NaCl water, respectively, with PVP, PVA, or partially hydrolyzed polyacrylamide polymer

EP 0 668 339 A1

## TABLE 9-A Glycol No. 3192 In Various Polymer Systems With 10%KCL WATER

| MATERIALS | A-1 | A-2 | A-3 | B-1 | B-2 | B-3 | C-1 | C-2 | C-3 |
|---|---|---|---|---|---|---|---|---|---|
| 10% KCl water, bbl | 0.86 | 0.86 | 0.86 | 0.86 | 0.86 | 0.86 | 0.86 | 0.86 | 0.86 |
| Caustic Soda, lb | 0.5 | 0.5 | 0.5 | 0.5 | 0.5 | 0.5 | 0.5 | 0.5 | 0.5 |
| PVP K-90, lb | 2.0 | | | 2.0 | | | 2.0 | | |
| PVA Airvol 540S, lb | | 2.0 | | | 2.0 | | | 2.0 | |
| NEW-DRILL PLUS, lb | | | 2.0 | | | 2.0 | | | 2.0 |
| MIL-PAC LV, lb | 2.0 | 2.0 | 2.0 | 2.0 | 2.0 | 2.0 | 2.0 | 2.0 | 2.0 |
| Biozan, lb | 0.75 | 0.75 | 0.75 | 0.75 | 0.75 | 0.75 | 0.75 | 0.75 | 0.75 |
| Mirataine ASC, lb | | | | | | | 7.0 | 7.0 | 7.0 |
| Glycol No. 3192, lb | | | | 17.5 | 17.5 | 17.5 | | | |
| MIL-BAR, lb | 204 | 204 | 204 | 204 | 204 | 204 | 204 | 204 | 204 |
| **PROPERTIES** | | | | | | | | | |
| Apparent Viscosity, cp | 18.5 | 33.5 | 28 | 25.5 | 41.5 | 30 | 27 | 36 | 49.5 |
| Plastic Viscosity, cp | 16 | 22 | 21 | 29 | 24 | 26 | 22 | 24 | 34 |
| Yield Point, lb/100 sqft. | 5 | 23 | 14 | 22 | 35 | 8 | 10 | 24 | 31 |
| API FLUID LOSS, ml | 7.8 | 4.0 | 7.6 | 4.0 | 3.2 | 2.0 | 6.2 | 4.4 | 4.0 |
| %Erosion Loss (calc on initial 8.8% moisture) | 13 | 9 | 25 | 4 | 4 | 19 | 6 | 3 | 4 |

## TABLE 9-B  Glycol No. 3192 In Various Polymer Systems With 20%NaCL WATER

| MATERIALS | A-1 | A-2 | A-3 | B-1 | B-2 | B-3 | C-1 | C-2 | C-3 |
|---|---|---|---|---|---|---|---|---|---|
| 20% NaCl water, bbl | 0.86 | 0.86 | 0.86 | 0.86 | 0.86 | 0.86 | 0.86 | 0.86 | 0.86 |
| Caustic Soda, lb | 0.5 | 0.5 | 0.5 | 0.5 | 0.5 | 0.5 | 0.5 | 0.5 | 0.5 |
| PVP K-90, lb | 2.0 | | | 2.0 | | | 2.0 | | |
| PVA Airvol 540S, lb | | 2.0 | | | 2.0 | | | 2.0 | |
| NEW-DRILL PLUS, lb | | | 2.0 | | | 2.0 | | | 2.0 |
| MIL-PAC LV, lb | 2.0 | 2.0 | 2.0 | 2.0 | 2.0 | 2.0 | 2.0 | 2.0 | 2.0 |
| Biozan, lb | 0.75 | 0.75 | 0.75 | 0.75 | 0.75 | 0.75 | 0.75 | 0.75 | 0.75 |
| Mirataine ASC, lb | | | | | | | 7.0 | 7.0 | 7.0 |
| Glycol No. 3192, lb | | | | 17.5 | 17.5 | 17.5 | | | |
| MIL-BAR, lb | 204 | 204 | 204 | 204 | 204 | 204 | 204 | 204 | 204 |
| **PROPERTIES** | | | | | | | | | |
| Apparent Viscosity, cp | 21.5 | 20.5 | 30 | 25.5 | 29.5 | 33.5 | 18 | 24.5 | 58.5 |
| Plastic Viscosity, cp | 21 | 14 | 26 | 22 | 22 | 30 | 16 | 18 | 43 |
| Yield Point, lb/100 sqft. | 1 | 13 | 8 | 7 | 15 | 7 | 4 | 13 | 31 |
| API FLUID LOSS, ml | 7.6 | 9.4 | 4.0 | 4.6 | 8.6 | 21 | 4.8 | 10.8 | 3.6 |
| %Erosion Loss (calc on initial 8.8% moisture) | 28 | 19 | 41 | 3 | 12 | 26 | 13 | 8 | 8 |

("PHPA"), using none or one of the betaine and the glycol.

The PVP utilized was K-90 from BASF. The PVA utilized was Airvol 540S from Air Products, and the PHPA was NEW-DRILL PLUS available from Baker Hughes Inteq. The betaine used was Mirataine ASC from Rhone-Poulenc. The glycol was Glycol No. 3192 available from Baker Performance Chemicals.

The samples were stirred for 45 minutes. Next, 25g of HOLE-PLUG was added to the samples, which were then rolled for 16 hours at 250 degrees F, and then sieved on an 18-mesh screen. The remaining HOLE-PLUG was washed, dried for four hours at 250 degrees F, and weighed. Percent erosion was calculated, assuming an initially determined moisture content of 8.8%. The results are presented in TABLEs 9A and 9B.

PVA appears to have some problems in the presence of higher concentrations of monovalent salts. The "A" series of samples have neither betaine nor glycol. The "B" series of samples contain glycol, and the "C" series of samples contain betaine

Sample numbers 1 contain PVP, sample numbers 2 contain PVA, and sample numbers 3 contain PHPA.

Referring now to TABLE 9A, the presence of either betaine or glycol improves the erosion loss data for PVP, PVA and PHPA. The presence of glycol improves the API Fluid Loss data for PVP, PVA and PHPA. The presence of betaine improves the API Fluid Loss data for PVP and PHPA.

Referring now to TABLE 9B, the presence betaine improves the erosion loss data for PVP, PVA and PHPA. The presence of glycol improves the erosion loss data for PVP and PVA. The presence of betaine improves the API Fluid Loss data for PVP and PHPA. The presence of glycol improves the API Fluid Loss data for PVP and PVA.

Example 10: Glycol No. 3274 In Various Polymer And Water Systems

Drilling fluids were formulated as shown in TABLE 10 using seawater, 10% KCl water and 20% NaCl water, with PVP, PVA, or partially hydrolyzed polyacrylamide polymer ("PHPA"), with or without the glycol (only sample A-3 contained betaine).

The PVP utilized was K-90 from BASF. The PVA utilized was Airvol 540S from Air Products, and the PHPA was NEW-DRILL PLUS available from Baker Hughes Inteq. The betaine used was Mirataine ASC from Rhone-Poulenc. The glycol was Glycol No. 3274 available from Baker Performance Chemicals.

The samples were stirred for 45 minutes. Next, 25g of HOLE-PLUG was added to the samples, which were then rolled for 16 hours, at 250 degrees F, and then sieved on an 18-mesh screen. The remaining HOLE-PLUG was washed, dried for four hours at 250 degrees F, and weighed. Percent erosion was calculated, assuming an initially determined moisture content of 8.8%. The results are presented in TABLE 10. Series "A" samples contain seawater, series "B" samples contain 10% KCl water, and series "C" samples contain 20% NaCl water. For series "B" and "C", numbers 1-3 have no glycol and numbers 4-6 have glycol. Also for series "B" and "C", numbers 1 and 4 are PVP, numbers 2 and 5 are PVA, and numbers 3 are PHPA.

Example 11.

Drilling fluids were formulated as shown in TABLE 11 using seawater only and with PVP, PVA, or partially hydrolyzed polyacrylamide polymer ("PHPA"), using none or either the glycol or both the betaine and the glycol. The PVP utilized was K-90 from BASF. The PVA utilized was Airvol 540S from Air Products, and the PHPA was NEW-DRILL PLUS available from Baker Hughes Inteq. The betaine used was Mirataine ASC

from Rhone-Poulenc. The glycol was Aquacol D available from Baker Performance Chemicals.

EP 0 668 339 A1

## TABLE 10   Glycol No.  3274  In Various Polymer And Various Water Systems

| MATERIALS | A-1 | A-2 | A-3 | A-4 | A-5 | B-1 | B-2 | B-3 | B-4 | B-5 | B-6 | C-1 | C-2 | C-3 | C-4 | C-5 | C-6 |
|---|---|---|---|---|---|---|---|---|---|---|---|---|---|---|---|---|---|
| Seawater, bbl | 0.86 | 0.86 | 0.86 | 0.86 | 0.86 | | | | | | | | | | | | |
| 10% KCl Water, bbl | | | | | | 0.86 | 0.86 | 0.86 | 0.86 | 0.86 | 0.86 | | | | | | |
| 20% NaCl Water, bbl | | | | | | | | | | | | 0.86 | 0.86 | 0.86 | 0.86 | 0.86 | 0.86 |
| Caustic Soda, lb | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| PVP K-90, lb | | | | | | | 2.0 | | 2.0 | | | 2.0 | | | 2.0 | | |
| PVA Airvol 540S, lb | | | | | | | | 2.0 | | 2.0 | | | 2.0 | | | 2.0 | |
| NEW-DRILL PLUS, lb | | | 2.0 | | | | | | 2.0 | | 2.0 | | | 2.0 | | | 2.0 |
| MIL-PAC LV, lb | 2.0 | 2.0 | 2.0 | | | | | | 2.0 | | 2.0 | | | 2.0 | | | 2.0 |
| Biozan, lb | 0.75 | 0.75 | 0.75 | 0.75 | 0.75 | 0.75 | 0.75 | 0.75 | 0.75 | 0.75 | 0.75 | 0.75 | 0.75 | 0.75 | 0.75 | 0.75 | 0.75 |
| Mirataine ASC, lb | | | 7.0 | | | | | | | | | | | | | | |
| Glycol No. 3274, lb | | 17.5 | 17.5 | | 17.5 | | | | 17.5 | 17.5 | 17.5 | | | | 17.5 | 17.5 | 17.5 |
| MIL-BAR, lb | 204 | 204 | 204 | 204 | 204 | 204 | 204 | 204 | 204 | 204 | 204 | 204 | 204 | 204 | 204 | 204 | 204 |
| **PROPERTIES** | | | | | | | | | | | | | | | | | |
| Apparent Viscosity, cp | 39 | 27.5 | 35 | 27.5 | 30 | 18.5 | 33.5 | 28 | 21 | 37.5 | 18 | 25.5 | 29.5 | 33.5 | 34.5 | 31.5 | 13.5 |
| Plastic Viscosity, cp | 26 | 19 | 25 | 16 | 18 | 16 | 22 | 21 | 15 | 25 | 16 | 22 | 22 | 30 | 29 | 23 | 13 |
| Yield Point, lb/100 sqft. | 26 | 17 | 20 | 23 | 24 | 5 | 23 | 14 | 6 | 25 | 4 | 7 | 15 | 7 | 11 | 17 | 1 |
| API FLUID LOSS, ml | 3.4 | N/C | 18.8 | 96 | 10.4 | 7.8 | 4.0 | 7.6 | 4.0 | 2.0 | 4.4 | 4.6 | 8.6 | 21 | 2.4 | 5.0 | 20 |
| %Erosion Loss (calc on initial 8.8% moisture) | 51 | 21 | 10 | 65 | 18 | 13 | 9 | 25 | 8 | 3 | 8 | 3 | 12 | 26 | 10 | 0 | 20 |

23

The samples were stirred for 45 minutes. Next, 25g of HOLE-PLUG was added to the samples, which were then rolled for 16 hours at 250 degrees F, and then sieved on an 18-mesh screen. The remaining HOLE-PLUG was washed, dried for four hours at 250 degrees F, and weighed. Percent erosion was calculated, assuming an initially determined moisture content of 8.8%. The results are presented in TABLE 11.

In TABLE 11, sample series "A" contains PVP, series "B" contains "PVA", series "C" contains PHPA, and series "D" is seawater without polymer. Numbers 1 have neither betaine nor glycol, numbers 2 have glycol, and numbers 3 have both betaine and glycol.

TABLE 11   Glycol "AQUACOL D" In Various Polymer Seawater Systems

| MATERIALS | A-1 | A-2 | A-3 | B-1 | B-2 | B-3 | C-1 | C-2 | C-3 | D-3 | D-2 | D-3 |
|---|---|---|---|---|---|---|---|---|---|---|---|---|
| Seawater, bbl | 0.86 | 0.86 | 0.86 | 0.86 | 0.86 | 0.86 | 0.86 | 0.86 | 0.86 | 0.86 | 0.86 | 0.86 |
| Caustic Soda, lb | 0.5 | 0.5 | 0.5 | 0.5 | 0.5 | 0.5 | 0.5 | 0.5 | 0.5 | 0.5 | 0.5 | 0.5 |
| PVP K-90, lb | 2.0 | 2.0 | 2.0 | | | | | | | | | |
| PVA Airvol 540S, lb | | | | 2.0 | 2.0 | 2.0 | | | | | | |
| NEW-DRILL PLUS, lb | | | | | | | 2.0 | 2.0 | 2.0 | | | |
| MIL-PAC LV, lb | 2.0 | 2.0 | 2.0 | 2.0 | 2.0 | 2.0 | 2.0 | 2.0 | 2.0 | 2.0 | 2.0 | 2.0 |
| Biozan, lb | 0.75 | 0.75 | 0.75 | 0.75 | 0.75 | 0.75 | 0.75 | 0.75 | 0.75 | 0.75 | 0.75 | 0.75 |
| Mirataine ASC, lb | | | 7.0 | | | 7.0 | | | 7.0 | | | 7.0 |
| Aquacol D, lb | | 17.5 | 17.5 | | 17.5 | 17.5 | | 17.5 | 17.5 | | 17.5 | 17.5 |
| MIL-BAR, lb | 204 | 204 | 204 | 204 | 204 | 204 | 204 | 204 | 204 | 204 | 204 | 204 |
| **PROPERTIES** | | | | | | | | | | | | |
| Apparent Viscosity, cp | 33 | 50 | 42 | 24.5 | 44.5 | 42 | 39 | 62 | 57.5 | 27.5 | 31 | 32.5 |
| Plastic Viscosity, cp | 22 | 34 | 30 | 16 | 33 | 32 | 26 | 37 | 35 | 16 | 21 | 21 |
| Yield Point, lb/100 sqft. | 22 | 32 | 24 | 17 | 23 | 20 | 26 | 52 | 45 | 23 | 20 | 23 |
| API FLUID LOSS, ml | 7.8 | 5.6 | 6.0 | 10.6 | 5.6 | 6.0 | 3.4 | 1.6 | 2.4 | 96 | 8.2 | 6.4 |
| %Erosion Loss (calc on initial 8.8% moisture) | 9 | 0 | 9 | 20 | 25 | 16 | 51 | 36 | 32 | 65 | 79 | 59 |

EP 0 668 339 A1

## Claims

1. A well fluid additive comprising:
   (a) at least one polymer selected from the group of polymers consisting of polymeric cellulose, derivatized starches, polyvinylpyrrolidone polyvinylalcohol and partially hydrolyzed polyacrylamide; and
   (b) a non-foaming amphoteric surfactant or a water soluble alcohol.

2. The well fluid additive of claim 1 wherein the amphoteric surfactant is a betaine.

3. The well fluid additive of claim 2 wherein the betaine is incorporated into the polymer.

4. The well fluid additive of any one of claims 1 to 3 wherein the additive comprises in the range of about 0.1 to about 50 weight percent polymer, in the range of about 0 to about 60 weight percent alcohol and in the range of about 0 to about 60 weight percent amphoteric surfactant.

5. The well fluid additive of any one of claim 1 to 4 wherein the water soluble alcohol is selected from among glycols, glycerols, sorbitors and derivatives thereof.

6. The well fluid additive of any one of claims 1 to 5 wherein the alcohol is a polyglycol having a molecular weight in the range of about 100 to about 1200.

7. The well fluid additive of any one of claims 1 to 5 wherein the alcohol is a polypropylene glycol having a molecular weight in the range of about 200 to about 600, the amphoteric surfactant is a betaine.

8. The well fluid additive of any one of claims 1 to 7 wherein the alcohol is a polypropylene glycol.

9. The well fluid additive of any one of claims 1 to 8 comprising both an amphoteric surfactant and a water soluble alcohol.

10. A well fluid comprising an aqueous component and the well fluid of any one of claims 1 to 9.

11. A method of stabilizing a subterranean formation penetrated by a borehole and wherein the formation comprises water-sensitive materials, the method comprising introducing a formation treatment fluid into the borehole and into contact with the formation, wherein the formation treatment fluid comprises the well fluid additive of any one of claims 1 to 9.

## EUROPEAN SEARCH REPORT

European Patent Office

Application Number

EP 95 30 0980

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB-A-2 086 923 (NL INDUSTRIES INC.)<br><br>* page 2, line 21 - page 3, line 39 *<br>* examples 1-11 *<br>--- | 1,4-8,<br>10,11 | C09K7/00<br>C09K7/02 |
| X,D | US-A-5 076 373 (A.H.HALE) | 1,4-6,<br>10,11 | |
| Y | * column 2, line 40 - column 3, line 56 *<br>* claims 1-4 *<br>--- | 7,8 | |
| Y | US-A-5 260 269 (A.H.HALE)<br><br>* column 2, line 65 - column 3, line 20 *<br>* column 3, line 62 - column 4, line 35 *<br>--- | 1,4-8,<br>10,11 | |
| Y | FR-A-2 624 132 (BAKER HUGHES)<br><br>* page 6, line 3 - line 31 *<br>* page 7, line 4 - line 18 *<br>--- | 1,4-8,<br>10,11 | |
| Y | WO-A-94 02567 (K.B.TECHNOLOGIES)<br>* page 21, line 4 - page 22, line 14 *<br>* page 23, line 15 - line 23 *<br>* claims 1,8-13,22,28 *<br>--- | 1,10,11 | TECHNICAL FIELDS SEARCHED (Int.Cl.6)<br><br>C09K |
| Y | EP-A-0 037 996 (ZH.GOLDSCHMIDT)<br><br>* page 4, line 6 - line 28 *<br>--- | 1-4,10,<br>11 | |
| Y | PATENT ABSTRACTS OF JAPAN<br>vol. 016 no. 387 (C-975) ,18 August 1992<br>& JP-A-04 126788 (SEKIYU KOUDAN) 27<br>April 1992,<br>* abstract *<br>----- | 1-4,10,<br>11 | |

The present search report has been drawn up for all claims

| Place of search | Date of completion of the search | Examiner |
|---|---|---|
| THE HAGUE | 19 May 1995 | Boulon, A |

EPO FORM 1503 03.82 (P04C01)